# EUROPÄISCHE PATENTSCHRIFT

(11) **EP 3 347 680 B1**
(45) Veröffentlichungstag und Bekanntmachung des Hinweises auf die Patenterteilung: **14.04.2021**
(21) Anmeldenummer: 16744794.5
(22) Anmeldetag: 29.07.2016
(51) Int. Cl.: G01D 5/14, G01D 5/12, G01D 5/244

(54) **DREHWINKELSENSOR-SYSTEM MIT VARIABLEM MESSWINKELBEREICH**
ROTATIONAL ANGLE SENSOR SYSTEM HAVING VARIABLE MEASUREMENT ANGLE RANGE
SYSTÈME DE CAPTEUR D'ANGLE DE ROTATION À PLAGE D'ANGLE DE MESURE VARIABLE

(30) Priorität: 07.09.2015 DE 102015217080; 05.02.2016 DE 102016201783
(43) Veröffentlichungstag der Anmeldung: 18.07.2018
(73) Patentinhaber: Continental Teves AG & Co. OHG, 60488 Frankfurt am Main (DE)
(72) Erfinder: ECKRICH, Jörg, 65201 Wiesbaden (DE); BRÜGGEMANN, Stephan, 60431 Frankfurt/Main (DE); ZACHOW, Jochen, 61479 Glashütten (DE)
(74) Vertreter: Continental Corporation
(86) Internationale Anmeldenummer: PCT/EP2016/068198
(87) Internationale Veröffentlichungsnummer: WO 2017/041959

(56) Entgegenhaltungen:
- DE-A1- 3 711 062
- DE-A1- 10 339 963
- DE-A1- 19 822 843
- DE-A1-102004 028 855
- DE-A1-102014 100 624

## Beschreibung

Die Erfindung betrifft ein Drehwinkelsensor-System nach dem Oberbegriff des Anspruches 1.

Drehwinkelsensor-Systeme nach dem Stand der Technik werden häufig bei Fahrzeugen mit aktiver Fahrwerksregelung, Niveauregulierung oder automatischer Leuchtweitenregulierung eingesetzt. Dabei ist das Gehäuse des Sensors fest am Chassis des Fahrzeugs befestigt und das Rad bzw. die Radaufhängung über ein Gestänge mit einem Bewegungsaufnehmer des Drehwinkelsensor-Systems gekoppelt. Auf diese Weise kann der Ein- und Ausfahrweg des Rads gegenüber dem Chassis erfasst werden.

Mit dem Bewegungsaufnehmer dreht sich beispielsweise ein magnetischer Encoder, dessen Winkelstellung durch ein Hall-Element oder einen anderen Sensor erfasst wird. Der Ein- und Ausfahrweg des Rads wird also in eine messbare Drehbewegung des Bewegungsaufnehmers überführt.

Dabei findet die Drehung in einem begrenzten Winkelintervall statt, das sich beispielsweise zwischen -45° und +45° um einen Nullpunkt befindet. Der Nullpunkt entspricht dann meist der natürlichen Auslenkung wenn das Fahrzeug auf einer waagrechten Ebene steht.

Mit Hilfe einer Auswerteelektronik, beispielsweise in Form eines Mikrocontrollers, wird aus der sensierten Winkelstellung ein zunächst digitales Ausgangssignal erzeugt. Daraus wird dann ein analoges oder digitales bzw. pulsweitenmoduliertes Signal erzeugt, wobei die Auflösung des digitalen Ausgangssignals auf 2^12 bit, also 4096 kleinste Einheiten (engl.: Digits) reduziert wird. Das Ausgangssignal, beispielsweise eine Spannung, wird dann an ein elektrisches Steuergerät übertragen. Aufgrund der hohen elektromagnetischen Einstrahlung und der langen Kabelwege in vielen Fahrzeugen würde bei herkömmlichen Schnittstellen eine höhere Auflösung zu einer Beeinträchtigung der Daten führen.

Da somit einerseits die Auflösung des Ausgangssignals beschränkt ist, andererseits aber auch nur ein beschränkter Winkelbereich gemessen werden soll, wird ein elektrisches Ausgangssignal mit sich wiederholenden Intervallen verwendet. Wird als Messwinkelintervall 90° gewählt, so wird das Ausgangssignal in Intervalle von 90° geteilt, von denen vier Stück einen Drehwinkel von 360° abbilden.

DE 103 39 963 A1 beschreibt ein Drehwinkelsensor-System, bei dem eine volle 360°-Drehung in Messwinkelintervalle von 90° aufgeteilt ist.

DE 198 22 843 A1 betrifft eine Schaltungsanordnung zur Bestimmung der Drehwinkelstellung und / oder Drehzahl einer Welle, wobei ein sinusförmig variierendes Analogsignal abgetastet und über einen Analog/Digital-Wandler in Digitalwerte umgesetzt wird.

DE 10 2004 028855 A1 beschreibt einen Drehwinkeldetektor zur Winkeldetektion mit hoher Auflösung.

DE 10 2014 100624 A1 beschreibt ein Drehwinkelsensor-System, bei dem eine analog-digital-Umwandlung eines aufgenommenen Signals erfolgt.

DE 37 11 062 A1 ist auf eine Positionsmessvorrichtung mit einem kapazitiven Messaufnehmer zur absoluten Winkel- und Wegmessung gerichtet, wobei der Messaufnehmer durch seine Konstruktion eine mechanische oder thermische Messwertdrift reduziert.

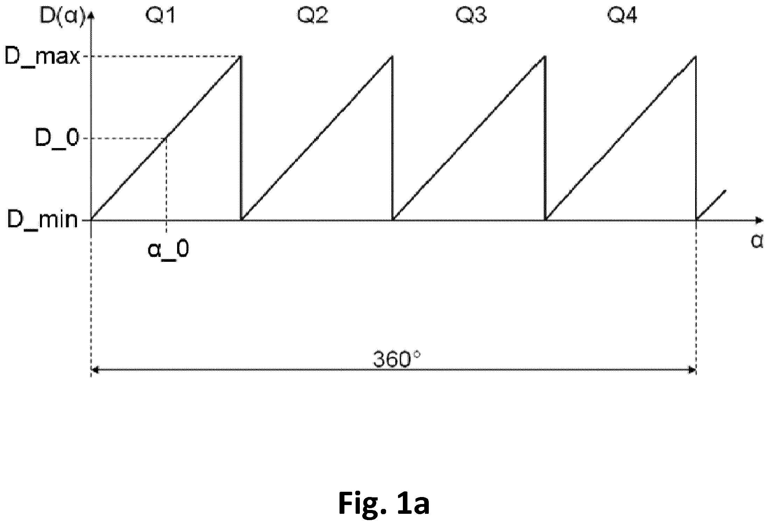

**Fig. 1a** zeigt ein Diagramm eines solchen Ausgangssignals D (α) mit 90°-Intervallen Q1, Q2, Q3, Q4. Auf der Abszisse ist der Drehwinkel α aufgetragen und die Ordinate gibt die Größe des Ausgangssignals D(α) an. Das dargestellte Ausgangssignal D(α) verläuft sägezahnförmig und teilt einen Winkelbereich von 360° so in vier gleich große Intervalle auf, die durch Sprungstellen begrenzt werden. Entlang einer positiven Drehwinkeländerung springt das Ausgangssignal D(α) an diesen Sprungstellen von einem maximalen Ausgangssignalwert D_max auf einen minimalen Ausgangssignalwert D_min. Das Messwinkelintervall erstreckt sich dabei nur auf das erste Intervall Q1, während die Intervalle Q2, Q3 und Q4 nicht zum Auslegungsbereich des Drehwinkelsensor-Systems gehören. Der Nullagen-Winkel α_0 mit dem zugehörigen Ausgangssignal-Wert D_0 ist als Nulllage, bei der das Fahrzeug auf einer waagerechten Ebene steht, definiert.

Bei der Erzeugung des digitalen Ausgangssignals D(α) wurde in diesem Beispiel über einem Winkel von 360° eine Datenmenge von 2^14 bit verwendet, was bei gleicher Auflösung einer Datenmenge von 2^12 bit über einem Winkel von 90° entspricht.

Da die Ausgabe des Ausgangssignals D(α) auf eine Datenmenge von 2^12 bit beschränkt ist, kann für die Auflösung des Ausgangssignals D(α) mit dem internen Auflösungswert höchstens ein Winkel von 90° als Messwinkelintervall genutzt werden, wie es in diesem Beispiel der Fall ist. Jeder kleinere Winkel würde zwar zu einer besseren Auflösung des ausgegebenen Ausgangssignals D(α) führen, wäre aber für viele Anwendungen unpraktikabel.

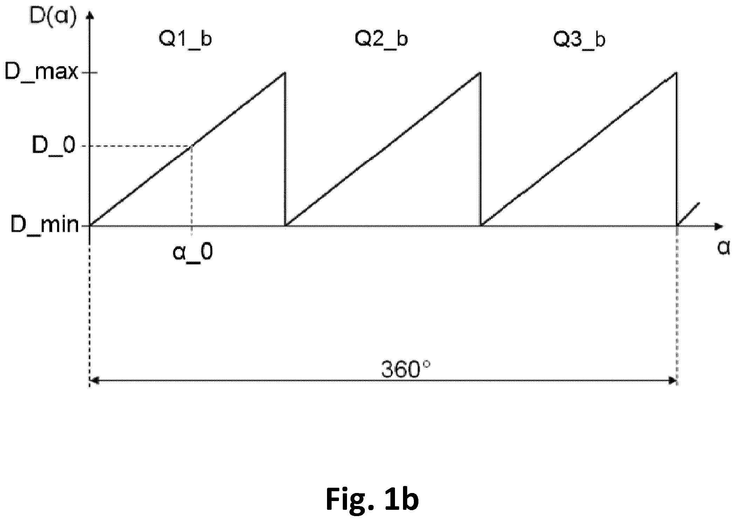

Den Fall eines größeren Messwinkelintervalls zeigt die **Fig. 1b** in einem Diagramm, das analog zu Fig. 1a aufgebaut ist. Das Ausgangssignal D(α) teilt sich in drei Intervalle Q1_b, Q2_b und Q3_b, die jeweils einen Drehwinkelbereich von 120° umfassen. Das Messwinkelintervall erstreckt sich wiederum nur auf das erste Intervall Q1_b. Da die zur Verfügung stehende Datenmenge für das Ausgangssignal D (α) nur bei 2^12 bit liegt, ist dessen Auflösung geringer als die interne Auflösung, bei der ein kleinerer Winkel, nämlich 90°, mit einer Datenmenge von 2^12 bit dargestellt werden konnte.

Anders ausgedrückt wäre bei Beibehaltung der internen Auflösung ein Datenvolumen von 2^14/3 bit = 5462 bit für das Intervall von 120° nötig. Zur Verfügung stehen jedoch nur 2^12 = 4096 bit, weshalb die Auflösung des Ausgangssignals D (α) in diesem Beispiel schlechter ist als die interne Auflösung.

Die in Fig. 1a und Fig. 1b gezeigten Ausgangssignalverläufe eines Drehwinkelsensor-Systems nach dem Stand der Technik sind zumindest näherungsweise an die eingeschränkte Auflösung angepasst, die von der Schnittstelle zwischen der Auswerteelektronik und dem elektrischen Steuergerät vorgegeben wird. Dies ist allerdings nicht besonders effektiv, da die interne Auflösung bei der Digitalisierung des analogen Sensorsignals, das bei der Winkelmessung entsteht, höher ist. Wenn durch die Beschränkung auf ein einzelnes Intervall die Datenmenge beim Erzeugen des Ausgangssignals D(α) reduziert wird, wird also ein Teil dieser internen Auflösung verschwendet.

Die Datenmenge muss nur dann nicht reduziert werden, wenn, wie im Beispiel der Fig. 1a das Messwinkelintervall so klein gewählt wird, dass dies nicht nötig ist. Allerdings hat ein kleines Messwinkelintervall neben einer eingschränkten Verwendbarkeit des Drehwinkelsensor-Systems zur Folge, dass es leicht zu einer unerwünschten Überschreitung des Intervalls, beispielsweise bei Steinschlag oder Verschleiß am Fahrzeug, kommen kann, wenn der Ein- oder Ausfahrweg des Rades besonders groß ist.

Darüber hinaus bewirkt die Beschränkung des Messwinkelintervalls, in den Figuren 1a, 1b für 90° bzw. 120° gezeigt, dass das Drehwinkelsensor-System auf eine ganz bestimmte Einbauposition beschränkt ist. Das Messwinkelintervall würde bei einer Verschiebung nach rechts oder links entlang des Ausgangssignal-Graphen eine Sprungstelle umfassen. Mit dem Überschreiten der Sprungstelle würde es jedoch zu einer fehlerhaften Interpretation des Ausgangssignals D(α) durch das elektrische Steuergerät kommen. Das Steuergerät könnte weder verschiedene Intervalle, noch deren Sprungstellen unterscheiden.

Es ist daher Aufgabe der Erfindung, ein Drehwinkelsensor-System bereitzustellen, das die genannten Nachteile beseitigt und in seiner Funktion simpel und effektiv ist.

Die Aufgabe wird durch die Merkmale der unabhängigen Ansprüche gelöst. Bevorzugte Weiterbildungen sind Gegenstand der abhängigen Ansprüche.

Dadurch, dass erfindungsgemäß die Auflösung des digitalen Ausgangssignals für ein Messwinkelintervall kleiner oder gleich 360° gleich groß ist wie die interne Auflösung, ergibt sich der Vorteil, dass die intern zu Verfügung stehende Auflösung voll ausgenutzt werden kann, ohne das Messwinkelintervall zu beschränken.

Gemäß einer Weiterbildung der Erfindung stellt das digitale Ausgangssignal in einem Maximalwinkelintervall von 0° bis 360°, eine eineindeutige Abbildung der Drehung des Bewegungsaufnehmers dar. Anstelle der Unterteilung in mehrere Intervalle Q1 bis Q4 bzw. Q1_b bis Q3_b, wie in den Figuren 1a und 1b dargestellt, umfasst ein einziges Intervall, das Maximalwinkelintervall, eine volle Umdrehung und sorgt für eine unkomplizierte Weiterverwertung des Ausgangssignals bspw. in einem Steuergerät.
Bei starken Ausschlägen, wie sie durch Verschleiß oder Steinschlag am Fahrzeug vorkommen können, kann es vorkommen, dass das Messwinkelintervall überschritten wird. In diesem Fall sorgt die eineindeutige Abbildung dafür, dass es in dem Maximalwinkelintervall nicht zu einem fehlerhaft interpretierten Ausgangssignal kommen kann.

Vorzugsweise liegt das Messwinkelintervall innerhalb des Maximalwinkelintervalls. In Folge der Eineindeutigkeit ist jedem Wert des Ausgangssignals innerhalb des Maximalwinkelintervalls genau ein bestimmter Drehwinkel des Bewegungsaufnehmers zugeordnet. Das Messwinkelintervall innerhalb des Maximalwinkelintervalls kann also bis zu 360° umfassen, ohne dass dabei ein uneindeutiges Ausgangssignal entsteht. Zudem ist auch eine Verschiebung der Randgrenzen des Messwinkelintervalls bzw. eine Veränderung des Nulllagen-Winkels unproblematisch. Damit wird das Drehwinkelsensor-System flexibler einsetzbar, da die Einbauposition frei gewählt werden kann.

Gemäß einer weiteren vorteilhaften Ausführungsform des erfindungsgemäßen Drehwinkelsensor-Systems deckt das Ausgangssignal einen Signalbereich zwischen einem Signalminimum und einem Signalmaximum ab und springt im Sinn einer Sprungstelle beim Überschreiten eines dem Signalmaximum zugeordneten Drehwinkels auf das Signalminimum, und beim Unterschreiten eines dem Signalminimum zugeordneten Drehwinkels auf das Signalmaximum über. Auf diese Weise ist die Funktionsfähigkeit des Drehwinkelsensor-Systems auch dann gegeben, wenn der Bewegungsaufnehmer mehr als eine volle Umdrehung vollzieht.

Vorzugsweise weist das Maximalwinkelintervall nur an seinen Rändern je eine Sprungstelle auf. Dies ist sinnvoll um auf einfache Weise ein eineindeutiges Ausgangssignal im Maximalwinkelintervall unter Ausnutzung der gesamten Signalbreite bereitzustellen.

Gemäß einer weiteren Ausführungsform des erfindungsgemäßen Drehwinkelsensor-Systems weist das Maximalwinkelintervall im Bereich zwischen seinen Rändern genau eine Sprungstelle auf.

Vorzugsweise liegt das Messwinkelintervall innerhalb eines Bereichs ohne Sprungstelle. Die Auswertung bspw. durch ein Steuergerät wird hierdurch vereinfacht.

Gemäß einer weiteren Ausführungsform des erfindungsgemäßen Drehwinkelsensor-Systems liegt das Messwinkelintervall innerhalb eines Bereichs der die Sprungstelle enthält. Um das Ausgangssignal weiterverwerten zu können, muss ein Steuergerät hierbei in der Lage sein die Sprungstelle zu erkennen, bzw. in deren Bereich das Ausgangssignal eindeutig interpretieren können.

Das Drehwinkelsensor-System ist zweckmäßigerweise so ausgebildet, dass das Messwinkelintervall die Mitte des Maximalwinkelintervalls umfasst, insbesondere mittig in dem Maximalwinkelintervall liegt. Bei starken Ausschlägen, wie sie durch Verschleiß oder Steinschlag am Fahrzeug vorkommen können, kann es vorkommen, dass das Messwinkelintervall überschritten wird. Durch ein mittig liegendes Messwinkelintervall ist der Abstand zu den Rändern des Maximalwinkelintervalls auf beiden Seiten des Messwinkelintervalls groß, so dass es nicht zu einem fehlerhaft interpretierten Ausgangssignal kommen kann.

Vorzugsweise beträgt die interne Auflösung wenigstens 2^10 bit, vorteilhafter Weise 2^12 bit, bevorzugter Weise 2^14 bit über einem Winkel von 360°.

Es ist bevorzugt, dass das Messwinkelintervall einen Winkelbereich von 90°, vorteilhafter Weise 120°, bevorzugter Weise 180° umfasst. Für übliche Drehwinkelsensor-Aufgaben an einem Fahrzeug ist ein solches Messwinkelintervall sinnvoll.

Es ist zweckmäßig, dass das Drehwinkelsensor-System eine Halterung aufweist, wobei die Halterung eine Befestigung des Drehwinkelsensor-Systems in verschiedenen Ausrichtungen und/oder Positionen an einem Fahrzeug zulässt.

Gemäß einem weiteren Aspekt der Erfindung wird die Aufgabe durch ein Verfahren zum Kalibrieren eines Drehwinkelsensor-Systems gelöst, umfassend die Verfahrensschritte
- Auslenken des Bewegungsaufnehmers um einen definierten ersten Winkel
- Erfassen und speichern eines ersten Sensorsignals
- Auslenken des Bewegungsaufnehmers um einen definierten zweiten Winkel
- Erfassen und speichern eines zweiten Sensorsignals
- Ermitteln von Steigung und Offset des Ausgangssignals (D(α)) und entsprechendes Konfigurieren der Auswerteelektronik
- Befestigen des Drehwinkelsensor-Systems an einer ersten Komponente eines Fahrzeuges,
- Befestigen des Bewegungsaufnehmers an einer zweiten Komponente eines Fahrzeuges, die relativ zu der ersten Komponente verschiebbar ist,
- Positionieren des Fahrzeugs in einer vordefinierten Nulllage,
- Erfassen und Speichern des Ausgangssignals des Drehwinkelsensor-Systems und Zuordnung eines Nullagen-Winkels zu dem Ausgangssignal in einem elektrischen Steuergerät.

Vorzugsweise stehen zum Befestigen des Bewegungsaufnehmers an der zweiten Komponente des Fahrzeuges mehrere Befestigungsstellen zur Verfügung.

Nach einem weiteren Aspekt der Erfindung wird die Aufgabe durch ein elektrisches Steuergerät gelöst, das dazu in der Lage ist, den Drehwinkel im Bereich der Sprungstelle aus dem digitalen Ausgangssignal heraus zu erfassen.

Es zeigen in schematischer Form:
Fig. 2 ein Diagramm eines Ausgangssignals eines erfindungsgemäßen Drehwinkelsensor-Systems nach einem ersten Ausführungsbeispiel,
Fig. 3 ein Diagramm eines Ausgangssignals eines erfindungsgemäßen Drehwinkelsensor-Systems nach einem zweiten Ausführungsbeispiel mit einer Sprungstelle im Maximalwinkelintervall, die außerhalb des Messwinkelintervalls liegt,
Fig. 4 ein Diagramm eines Ausgangssignals eines erfindungsgemäßen Drehwinkelsensor-Systems nach einem dritten Ausführungsbeispiel mit Sprungstelle im Maximalwinkelintervall, die innerhalb des Messwinkelintervalls liegt.

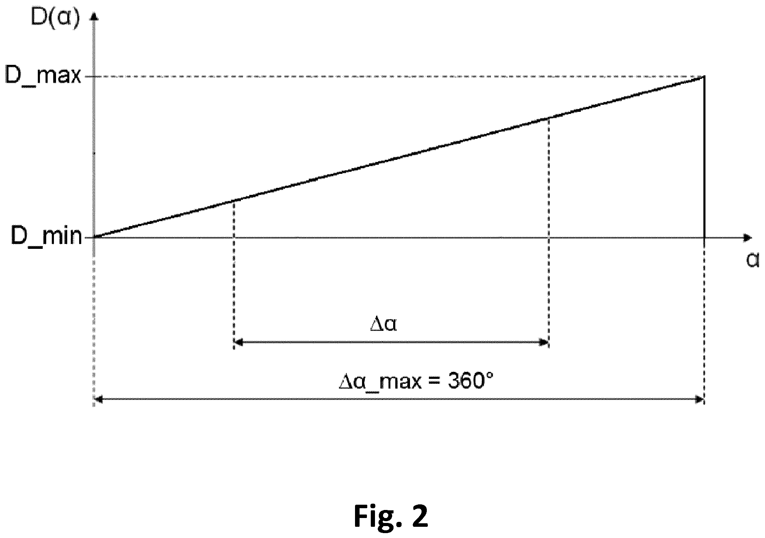

In dem in **Fig. 2** gezeigten Diagramm ist auf der Abszisse der Drehwinkel α aufgetragen. Die Ordinate gibt die Größe des Ausgangssignals D(α) an. Das dargestellte Ausgangssignal D(α) verläuft sägezahnförmig und verläuft linear entlang eines Winkelbereichs von 360°.

Anstelle mehrerer Intervalle wird der Bereich von 0° bis 360° durch ein einziges Maximalwinkelintervall Δα_max abgedeckt. Dieses ist an seinen Rändern bei 0° und 360° durch Sprungstellen begrenzt. Damit ist im Sinn der Eineindeutigkeit jedem Winkel in dem Maximalwinkelintervall Δα_max ein bestimmter Wert des Ausgangssignals D(α) zugeordnet und umgekehrt.

Wird mit einem erfindungsgemäßen Drehwinkelsensor-System bei einem Fahrzeug beispielsweise der Ein- und Ausfahrweg eines Rads gegenüber dem Chassis erfasst, so führt diese Bewegung normalerweise nur zu Drehwinkeländerungen des Bewegungsaufnehmers, die zwischen 60° und 180° liegen. Daher nimmt das Messwinkelintervall Δα nur einen Teil des Maximalwinkelintervalls Δα_max ein.

Wie schon bei dem in den Figuren 1a und 1b beschriebenen Stand der Technik steht auch bei diesem Ausführungsbeispiel eine interne Auflösung des Drehwinkelsensor-Systems zur Verfügung, die bei 2^14 bit für einen Winkelbereich von 360°, also bei 0,022° pro Digit, liegt. Ein Digit bezeichnet dabei die kleinste Dateneinheit.

Die Datenmenge zur Ausgabe des digitalen Ausgangssignals D(α) richtet sich nach der Größe des Messwinkelintervalls Δα. Die Auflösung liegt dabei jedoch stets bei 0,022° pro Digit, dem Auflösungswert der internen Auflösung. Dies wird dadurch gewährleistet, dass für das Ausgangssignal D(α) über dem Maximalwinkelintervall Δα_max eine Datenmenge von, wie schon bei der internen Auflösung, 2^14 bit zur Verfügung steht. Die eineindeutige Abbildung der Drehung des Bewegungsaufnehmers durch das Ausgangssignal D(α) sorgt dafür, dass die gesamte Datenmenge von 2^14 bit genutzt werden kann.

Da das Messwinkelintervall Δα jedoch meist deutlich kleiner als 360° ist, wird jedoch in der Regel eine viel kleinere Datenmenge genutzt. Durch die eineindeutige Abbildung über 360° besteht jedoch dann die Möglichkeit, das Messwinkelintervall Δα auszudehnen, beispielsweise bei ungewollter übermäßiger Auslenkung der Fahrzeugkomponenten oder weil dies für eine bestimmte Anwendung erforderlich ist.

Zusätzlich kann das Messwinkelintervall Δα innerhalb des Maximalwinkelintervalls Δα_max verschoben werden, beispielsweise wenn das Drehwinkelsensor-System in einer anderen Lage, also mit einem anders ausgelenkten Bewegungsaufnehmer, eingebaut wird.

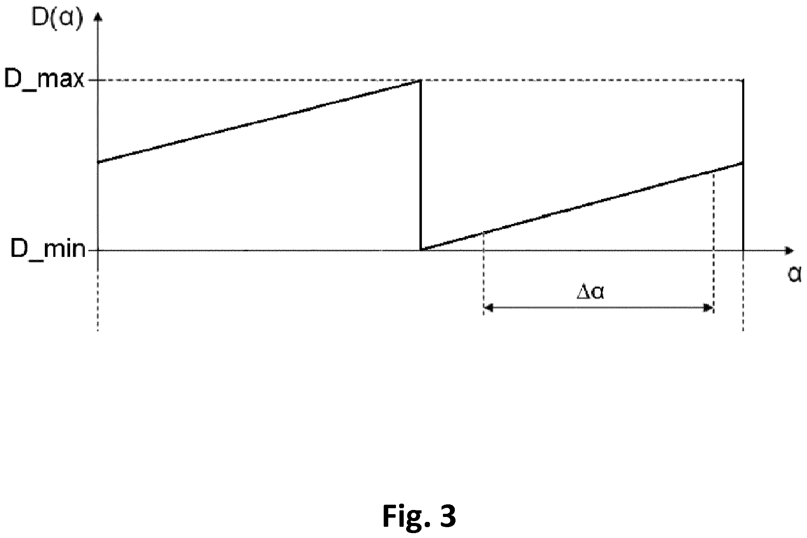

In dem Diagramm der **Fig. 3** ist erkennbar, dass das Maximalwinkelintervall Δα_max bei diesem Ausführungsbeispiel eine Sprungstelle aufweist. Von links kommend springt der Wert des Ausgangssignals D(α) hier von D_max auf D_min, von rechts kommend anders herum.

Trotz der Sprungstelle ist der Maximalwinkelbereich über 360° als eineindeutige Abbildung der Drehung des Bewegungsaufnehmers definiert. Das Messwinkelintervall Δα ist hier so definiert, dass es die Sprungstelle nicht enthält.

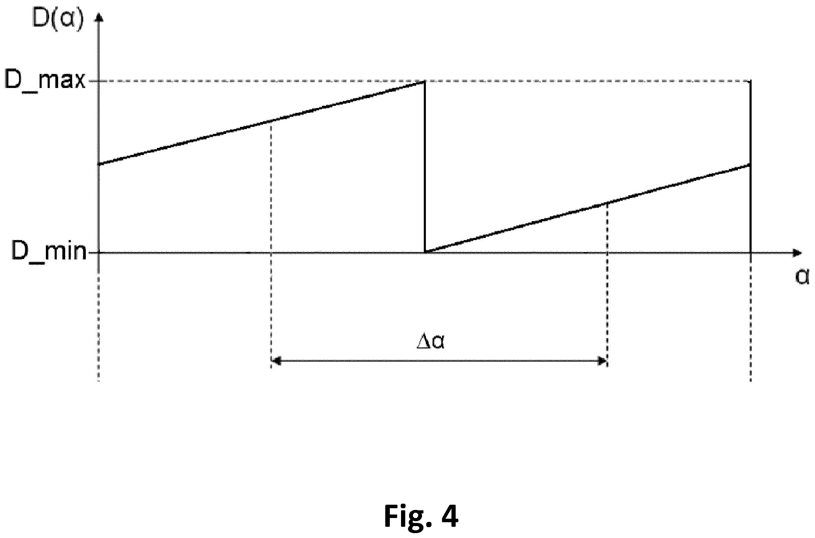

In dem Diagramm der **Fig. 4** ist zu sehen, dass bei diesem Ausführungsbeispiel das Messwinkelintervall Δα die Sprungstelle enthält. Damit das entsprechende Ausgangssignal D(α) von einem elektrischen Steuergerät verwertet werden kann, ist dieses so ausgebildet, dass es die Winkelinformation auch unmittelbar an der Sprungstelle interpretieren kann, ohne dass es zu Fehlern kommt.

Das Drehwinkelsensor-System wird in zwei Etappen kalibriert. Zunächst wird im Werk eine Grundkalibrierung vorgenommen. Diese Grundkalibrierung umfasst u. a. die Schritte:
- Auslenken des Bewegungsaufnehmers um einen definierten ersten Winkel,
- Erfassen und speichern eines ersten Sensorsignals,
- Auslenken des Bewegungsaufnehmers um einen definierten zweiten Winkel,
- Erfassen und speichern eines zweiten Sensorsignals, und
- Ermitteln von Steigung und Offset des Ausgangssignals (D(α)) und entsprechendes Konfigurieren und speichern der Steigung und des Offsets in die Auswerteelektronik.

In einer zweiten Etappe wird beim Einbau des Drehwinkelsensor-Systems u. a. folgendes zum Kalibrieren durchgeführt:
- Befestigen des Drehwinkelsensor-Systems an einer ersten Komponente eines Fahrzeuges,
- Befestigen des Bewegungsaufnehmers an einer zweiten Komponente eines Fahrzeuges, die relativ zu der ersten Komponente verschiebbar ist,
- Positionieren des Fahrzeugs in einer vordefinierten Nulllage,
- Erfassen und Speichern des Ausgangssignals (D(α)) des Drehwinkelsensor-Systems und Zuordnung eines Nullagen-Winkels zu dem Ausgangssignal (D(α)) in einem elektrischen Steuergerät.

Das Drehwinkelsensor-System ist besonders bevorzugt als Höhenstandsensor verwendbar bzw. das Drehwinkelsensor-System ist als Höhenstandsensor ausgebildet. Der Einbau von Höhenstandsensoren kann dem Umstand unterliegen, dass Einbaulage der Höhenstandsensoren in einem Fahrzeug sich deutlich voneinander unterscheiden. Anders formuliert befinden sich die Bewegungsaufnehmer der Höhenstandsensoren zum Zeitpunkt des Einbaus in unterschiedlichen Lagen, so dass sich die Nulllagen der Höhenstandsensoren sich voneinander unterscheiden. Insbesondere in dem Fall, dass das Maximalwinkelintervall 360° umfasst ist es dann aber irrelevant, wo die Einbaulage des Bewegungsaufnehmers sich befindet.

## Patentansprüche

1. Drehwinkelsensor-System aufweisend
- einen drehbar gelagerten Bewegungsaufnehmer,
- einen Sensor, der dazu ausgebildet ist, eine Drehung des Bewegungsaufnehmers zu erfassen, wobei die Drehung auf ein Messwinkelintervall (Δα) ausgelegt ist,
- eine Auswerteelektronik, die dazu ausgebildet ist, ein analoges Signal von dem Sensor zu empfangen und mit einer internen Auflösung zu digitalisieren und ein digitales Ausgangssignal (D(α)) auszugeben, das die von dem Sensor erfasste Drehung wiedergibt,
wobei die Auflösung des digitalen Ausgangssignals (D(α)) für ein Messwinkelintervall (Δα) kleiner oder gleich 360° gleich groß ist wie die interne Auflösung, **dadurch gekennzeichnet, dass** die Auflösung des digitalen Ausgangssignals (D(α)) im Fall eines Messwinkelintervalls (Δα) größer als 90° gleich groß ist wie die interne Auflösung und dass das Drehwinkelsensor-System als Höhenstandsensor ausgebildet ist, wobei der Höhenstandsensor so ausgebildet ist, dass ein Einbau in einem Fahrzeug in unterschiedlichen Einbaulagen möglich ist.

2. Drehwinkelsensor-System nach Anspruch 1, wobei das digitale Ausgangssignal (D(α)) in einem Maximalwinkelintervall (Δα_max) von 0° bis 360°, eine eineindeutige Abbildung der Drehung des Bewegungsaufnehmers darstellt.

3. Drehwinkelsensor-System nach Anspruch 2, wobei das Messwinkelintervall (Δα) innerhalb des Maximalwinkelintervalls (Δα_max) liegt.

4. Drehwinkelsensor-System nach einem der vorhergehenden Ansprüche, wobei das Ausgangssignal (D(α)) einen Signalbereich zwischen einem Signalminimum und einem Signalmaximum abdeckt und im Sinne einer Sprungstelle beim Überschreiten eines dem Signalmaximum zugeordneten Drehwinkels auf das Signalminimum überspringt, und beim Unterschreiten eines dem Signalminimum zugeordneten Drehwinkels auf das Signalmaximum überspringt.

5. Drehwinkelsensor-System nach Anspruch 4, wobei das Maximalwinkelintervall (Δα_max) nur an seinen Rändern je eine Sprungstelle aufweist.

6. Drehwinkelsensor-System nach Anspruch 4, wobei das Maximalwinkelintervall (Δα_max) im Bereich zwischen seinen Rändern genau eine Sprungstelle aufweist.

7. Drehwinkelsensor-System nach Anspruch 6, wobei das Messwinkelintervall (Δα) innerhalb eines Bereichs ohne Sprungstelle liegt.

8. Drehwinkelsensor-System nach Anspruch 6, wobei das Messwinkelintervall (Δα) innerhalb eines Bereichs liegt der die Sprungstelle enthält.

9. Drehwinkelsensor-System nach einem der Ansprüche 3 bis 8, wobei das Messwinkelintervall (Δα) die Mitte des Maximalwinkelintervalls (Δα_max) umfasst, insbesondere mittig in dem Maximalwinkelintervall (Δα_max) liegt.

10. Drehwinkelsensor-System nach einem der vorhergehenden Ansprüche, wobei die interne Auflösung wenigstens 2^10 bit, vorteilhafter Weise 2^12 bit, bevorzugter Weise 2^14 bit über einem Winkel von 360° beträgt.

11. Drehwinkelsensor-System nach einem der vorhergehenden Ansprüche, wobei das Messwinkelintervall (Δα) einen Winkelbereich von 90°, vorteilhafter Weise 120°, bevorzugter Weise 180° umfasst.

12. Drehwinkelsensor-System nach einem der vorhergehenden Ansprüche, aufweisend eine Halterung, wobei die Halterung eine Befestigung des Drehwinkelsensor-Systems in verschiedenen Ausrichtungen und/oder Positionen an einem Fahrzeug zulässt.

13. Elektrisches Steuergerät, dazu ausgebildet ein digitales Ausgangssignal (D(α)) eines Drehwinkelsensor-Systems nach Anspruch 6 zu erfassen, wobei das elektrische Steuergerät in der Lage ist, den Drehwinkel im Bereich der Sprungstelle aus dem digitalen Ausgangssignal (D(α)) heraus zu erfassen.

## Claims

1. Rotation angle sensor system having
- a rotatably mounted motion sensor,
- a sensor that is designed to pick up a rotation of the motion sensor, the rotation being configured for a measurement angle interval (Δα),
- evaluation electronics that are designed to receive an analogue signal from the sensor and to digitize said analogue signal with an internal resolution and to output a digital output signal (D(α)) that reproduces the rotation picked up by the sensor,
wherein the resolution of the digital output signal (D(α)) for a measurement angle interval (Δα) less than or equal to 360° is of the same magnitude as the internal resolution, **characterized in that** the resolution of the digital output signal (D(α)) in the case of a measurement angle interval (Δα) greater than 90° is of the same magnitude as the internal resolution and **in that** the rotation angle sensor system is in the form of a height sensor, wherein the height sensor is designed such that installation in a vehicle in different installation orientations is possible.

2. Rotation angle sensor system according to Claim 1, wherein the digital output signal (D(α)) in a maximum angle interval (Δα_max) from 0° to 360° depicts a unique mapping of the rotation of the motion sensor.

3. Rotation angle sensor system according to Claim 2, wherein the measurement angle interval (Δα) is within the maximum angle interval (Δα_max).

4. Rotation angle sensor system according to one of the preceding claims, wherein the output signal (D(α)) covers a signal range between a signal minimum and a signal maximum and, as defined by a discontinuity, skips to the signal minimum when a rotation angle associated with the signal maximum is exceeded and skips to the signal maximum when a rotation angle associated with the signal minimum is undershot.

5. Rotation angle sensor system according to Claim 4, wherein the maximum angle interval (Δα_max) has one discontinuity at each of its edges only.

6. Rotation angle sensor system according to Claim 4, wherein the maximum angle interval (Δα_max) has exactly one discontinuity in the area between its edges.

7. Rotation angle sensor system according to Claim 6, wherein the measurement angle interval (Δα) is within an area without a discontinuity.

8. Rotation angle sensor system according to Claim 6, wherein the measurement angle interval (Δα) is within an area that includes the discontinuity.

9. Rotation angle sensor system according to one of Claims 3 to 8, wherein the measurement angle interval (Δα) comprises the middle of the maximum angle interval (Δα_max), in particular is in the middle of the maximum angle interval (Δα_max).

10. Rotation angle sensor system according to one of the preceding claims, wherein the internal resolution is at least 2^10 bits, advantageously 2^12 bits, preferably 2^14 bits over an angle of 360°.

11. Rotation angle sensor system according to one of the preceding claims, wherein the measurement angle interval (Δα) comprises an angle range of 90°, advantageously 120°, preferably 180°.

12. Rotation angle sensor system according to one of the preceding claims, having a bracket, wherein the bracket permits mounting of the rotation angle sensor system in different alignments and/or positions on a vehicle.

13. Electrical control unit, designed to pick up a digital output signal (D(α)) of a rotation angle sensor system according to Claim 6, wherein the electrical control unit is capable of picking up the rotation angle in the area of the discontinuity from the digital output signal (D(α)).

## Revendications

1. Système de capteur d'angle de rotation, présentant
- un capteur de mouvement monté rotatif,
- un capteur qui est réalisé pour détecter une rotation du capteur de mouvement, la rotation étant dimensionnée pour un intervalle d'angle de mesure (Δα),
- une électronique d'évaluation qui est réalisée pour recevoir un signal analogique du capteur et pour le numériser avec une résolution interne et pour émettre un signal de sortie numérique (D(α)) qui reproduit la rotation détectée par le capteur,
dans lequel la résolution du signal de sortie numérique (D(α)) pour un intervalle d'angle de mesure (Δα) inférieur ou égal à 360° est égale à la résolution interne, **caractérisé en ce que** la résolution du signal de sortie numérique (D(α)) dans le cas d'un intervalle d'angle de mesure (Δα) supérieur à 90° est égale à la résolution interne, et **en ce que** le système de capteur d'angle de rotation est réalisé sous la forme d'un capteur de niveau, le capteur de niveau étant réalisé pour permettre le montage sur un véhicule dans différentes positions de montage.

2. Système de capteur d'angle de rotation selon la revendication 1, dans lequel le signal de sortie numérique (D(α)) dans un intervalle d'angle maximal (Δα_max) de 0° à 360° est une représentation biunivoque de la rotation du capteur de mouvement.

3. Système de capteur d'angle de rotation selon la revendication 2, dans lequel l'intervalle d'angle de mesure (Δα) se trouve à l'intérieur de l'intervalle d'angle maximal (Δα_max).

4. Système de capteur d'angle de rotation selon l'une quelconque des revendications précédentes, dans lequel le signal de sortie (D(α)) couvre une plage de signal entre un minimum de signal et un maximum de signal, et concernant un point de discontinuité, lors du dépassement d'un angle de rotation associé au maximum de signal, il passe au minimum de signal, et lors du soupassement d'un angle de rotation associé au minimum de signal, il passe au maximum de signal.

5. Système de capteur d'angle de rotation selon la revendication 4, dans lequel l'intervalle d'angle maximal (Δα_max) présente respectivement un point de discontinuité uniquement au niveau de ses bords.

6. Système de capteur d'angle de rotation selon la revendication 4, dans lequel l'intervalle d'angle maximal (Δα_max) présente dans la zone entre ses bords exactement un point de discontinuité.

7. Système de capteur d'angle de rotation selon la revendication 6, dans lequel l'intervalle d'angle de mesure (Δα) se trouve à l'intérieur d'une zone sans point de discontinuité.

8. Système de capteur d'angle de rotation selon la revendication 6, dans lequel l'intervalle d'angle de mesure (Δα) se trouve à l'intérieur d'une zone qui contient le point de discontinuité.

9. Système de capteur d'angle de rotation selon l'une quelconque des revendications 3 à 8, dans lequel l'intervalle d'angle de mesure (Δα) comprend le centre de l'intervalle d'angle maximal (Δα_max), se trouvant en particulier au milieu dans l'intervalle d'angle maximal (Δα_max).

10. Système de capteur d'angle de rotation selon l'une quelconque des revendications précédentes, dans lequel la résolution interne est au moins égale à 2^10 bits, de façon avantageuse à 2^12 bits, de préférence à 2^14 bits sur un angle de 360°.

11. Système de capteur d'angle de rotation selon l'une quelconque des revendications précédentes, dans lequel l'intervalle d'angle de mesure (Δα) comprend une plage d'angle de 90°, de façon avantageuse de 120°, de préférence de 180°.

12. Système de capteur d'angle de rotation selon l'une quelconque des revendications précédentes, présentant un support, le support permettant de fixer le système de capteur d'angle de rotations dans différentes orientations et/ou positions sur un véhicule.

13. Appareil de commande électrique qui est réalisé pour détecter un signal de sortie numérique (D(α)) d'un système de capteur d'angle de rotations selon la revendication 6, l'appareil de commande électrique étant capable de distinguer l'angle de rotation au niveau du point de discontinuité dans le signal de sortie numérique (D(α)).
